# EUROPEAN PATENT APPLICATION

(11) **EP 3 905 452 A1**
(43) Date of publication of application: **03.11.2021**
(21) Application number: 19903311.9
(22) Date of filing: 30.12.2019
(51) Int. Cl.: H01R 13/518, H01R 13/631

(54) **ELECTRICAL CONNECTOR**

(30) Priority: 29.12.2018 CN 201811641022
(71) Applicant: Aulton New Energy Automotive Technology Group, Shanghai 201315 (CN)
(72) Inventor: ZHANG, Jianping, Shanghai 201315 (CN); HUANG, Chunhua, Shanghai 201315 (CN)
(74) Representative: Studio Torta S.p.A.
(86) International application number: PCT/CN2019/130108
(87) International publication number: WO 2020/135885

(57) **Abstract**

An electrical connector, comprising a housing (1) and a plurality of insertion assemblies (2). The housing (1) is provided with a plurality of wire outlets (11). The plurality of insertion assemblies (2) has one-to-one correspondence to the plurality of wire outlets (11). Each insertion assembly (2) comprises a standard insertion member (21) and a matching member (22). The standard insertion member (21) is connected to the housing (1), and the standard insertion member (21) passes through the wire outlet (11). One end of the matching member (22) is detechably connected to the standard insertion member (21), and the other end of the matching member (22) is used for connecting to an external harness. The electrical connector simplifies the connection mode between the housing (1) and the standard insertion members (21) and the modeling of the housing (1), simplifies machining, saves the costs, reduces the difficulty in mounting, and improves the production efficiency. In addition, the electrical connector is standardized by means of the standard insertion members (21) and the matching members (22), and can be adjusted according to requirements to adapt to different use scenarios.

## Description

This application claims priority to Chinese Patent Application No. 2018116410220, filed on December 29, 2018, the entire contents of which are incorporated herein by reference.

### FIELD

The present invention relates to an electrical connector.

### BACKGROUND

At present, output terminals of electrical connectors on the market are all of a straight-out type, a housing is provided with an outlet structure, and a cable directly passes through the outlet structure of the housing and is directly connected to a vehicle controller after being sealed. This solution requires that the cable and the outlet structure are accurately matched to ensure the sealing performance in the housing, which improves the manufacturing accuracy of the housing, increases the difficulty of the production process, and increases the cost accordingly. Moreover, since the output terminal of the electrical connector is of a straight-out type, the type and length of the cable cannot be adjusted, and the use requirement for different cable lengths and types of different vehicle models cannot be met, which causes inconvenience in use and is not conducive to standardization and platform applications.

### SUMMARY

A technical problem to be solved by the present invention is to provide an electrical connector to overcome such defects that an output terminal of an electrical connector in a prior art is of a straight-out type, which improves the manufacturing accuracy of a housing, increases the difficulty of the production process, increases the cost accordingly, and can not meet the use requirement for different cable lengths and types of different vehicle models, causing inconvenience in use.

The present invention solves the above technical problem through the following technical solution.

Provided is an electrical connector, including: a housing provided with a plurality of wire outlets; and a plurality of plug-in assemblies corresponding to the plurality of wire outlets one to one, the plug-in assembly including a standard plug-in member and a matching member, wherein the standard plug-in member is connected to the housing and passes through the wire outlet, one end of the matching member is detachably connected to the standard plug-in member, and the other end of the matching member is configured to be connected to an external harness.

In this solution, with the above-mentioned structural form, the housing and the standard plug-in members are connected as standard parts to realize the standardization of the standard plug-in member and the housing, thereby simplifying the modeling of the housing, simplifying machining, saving the costs, reducing the difficulty in manufacturing and mounting, and improving the production efficiency of the electrical connector.

In addition, the matching members may be optional according to different models of vehicles. The matching members can be adjusted according to requirements for different harness lengths and different connection specifications to get adapted to different use scenarios.

Preferably, the standard plug-in member includes a mounting plate and a plug-in body, the mounting plate is connected to the housing, the plug-in body passes through the mounting plate and the wire outlet and is connected to the mounting plate, and the matching member is plugged in the plug-in body.

Preferably, the mounting plate includes a plate body and a plurality of thickened portions, the plug-in body passes through and is connected to the plate body, one side of the plate body is connected to the housing, the plurality of thickened portions are all located on the other side of the plate body, one end of the thickened portion is connected to the plate body, the other end of the thickened portion extends and protrudes outwardly, the mounting plate is provided with a plurality of mounting holes corresponding to the plurality of thickened portions one to one, the mounting holes penetrate the thickened portions and the plate body and are connected to the housing through fasteners.

In this solution, with the above-mentioned structural form, the mounting holes are formed in the thickened portions and connected to the housing, which effectively strengthens connection strength between the standard plug-in member and the housing, improves the stability of the electrical connector, and saves the internal space resource of the housing.

Preferably, the mounting plate further includes a plurality of reinforcing ribs, and both ends of the reinforcing rib are respectively connected to the plate body and the thickened portion.

In this solution, with the above-mentioned structural form, because of the reinforcing ribs, the structural strength of the standard plug-in member is effectively strengthened and the stability of the electrical connector is improved.

Preferably, the standard plug-in member further includes at least one foolproof part, the foolproof part is connected to the mounting plate and/or the plug-in body, the housing is provided with at least one matching portion, and the matching portions are in one-to-one correspondence and matched with the foolproof parts.

In this solution, with the above-mentioned structural form, the standard plug-in member is easily installed on and connected to the housing through the foolproof part.

Preferably, one end of the foolproof part is connected to a side, facing the housing, of the mounting plate, the other end of the foolproof part extends and protrudes outwardly, the matching portion is configured as a positioning hole, and the foolproof part is inserted into the positioning hole; and/or one end of the foolproof part is connected to an outer peripheral surface of the plug-in body, the other end of the foolproof part extends and protrudes outwardly along a radial direction of the plug-in body, the matching portion is configured as a notch, and the foolproof part passes through the notch.

In this solution, with the above-mentioned structural form, due to the foolproof part and the positioning hole, accurate positioning is realized, the installation and connection of the housing and the standard plug-in member are facilitated, and the stability of the electrical connector is improved.

Preferably, the foolproof part, the mounting plate and the plug-in body are integrally formed.

In this solution, with the above-mentioned structural form, the structural strength of the standard plug-in member is effectively strengthened and the stability of the electrical connector is improved. Moreover, the electrical connector is convenient to manufacture, install and connect.

Preferably, a seal ring is compressed between the mounting plate and the housing; the seal ring is connected to and surrounds the wire outlet incessantly, the mounting plate is provided with a groove on a side facing the housing, and the seal ring is inserted into the groove.

In this solution, with the above-mentioned structural form, the sealing performance inside the housing is effectively strengthened by the sealing ring, thereby ensuring the stability and reliability of the electrical connector, and prolonging the service life of the electrical connector.

In addition, the groove facilitates the installation and connection of the seal ring, and the groove can reserve a space for the deformation of the seal ring, effectively preventing the seal ring from being damaged.

Preferably, the standard plug-in member is configured as a high-voltage socket, and the matching member is configured as a high-voltage plug; or, the standard plug-in member is configured as a high-voltage plug, and the matching member is configured as a high-voltage socket; the high-voltage socket is fitted with the high-voltage plug; or the standard plug-in member is configured as a low-voltage socket and the matching member is configured as a low-voltage plug; or, the standard plug-in member is configured as a low-voltage plug and the matching member is configured as a low-voltage socket; the low-voltage socket is fitted with the low-voltage plug.

Preferably, an outer peripheral surface of the standard plug-in member is provided with at least one guide groove, the guide groove extends along an insertion direction of the matching member, the matching member is provided with at least one guide portion, the guide grooves are in one-to-one correspondence with the guide portions, and the guide portion is configured to slide in the guide groove; or an outer peripheral surface of the standard plug-in member is provided with at least one guide portion, the guide portion extends along an insertion direction of the matching member, the matching member is provided with at least one guide groove, the guide grooves are in one-to-one correspondence with the guide portions, and the guide portion is configured to slide in the guide groove.

In this solution, with the above-mentioned structural form, the guide portion and the guide groove play a role of guiding and positioning, which improves the plug-in accuracy of the matching member and the standard plug-in member and further improves the stability of the electrical connector.

On the basis of conforming to common knowledge in the art, the above-mentioned preferred conditions can be combined arbitrarily to obtain preferred embodiments of the present invention.

The positive and progressive effects of the present invention are as follows.

According to the electrical connection of the present invention, a connection mode between the housing and the standard plug-in members and the modeling of the housing are simplified, thereby simplifying machining, saving the costs, reducing the difficulty in mounting, and improving the production efficiency. Moreover, the electrical connector can be standardized by means of the standard plug-in members and the matching members, and can be adjusted according to requirements to get adapted to different use scenarios.

### BRIEF DESCRIPTION OF THE DRAWINGS

Fig. 1 is a schematic structural diagram of an electrical connector according to an embodiment of the present invention.
Fig. 2 is a schematic exploded structural diagram of an electrical connector according to an embodiment of the present invention.
Fig. 3 is a schematic structural diagram of a housing of an electrical connector according to an embodiment of the present invention.
Fig. 4 is a schematic structural diagram of a high-voltage socket of a plug-in assembly in an electrical connector according to an embodiment of the present invention.
Fig. 5 is another schematic structural diagram of a high-voltage socket of a plug-in assembly in an electrical connector according to an embodiment of the present invention.
Fig. 6 is a schematic structural diagram of a high-voltage plug of a plug-in assembly in an electrical connector according to an embodiment of the present invention.
Fig. 7 is a schematic structural diagram of a low-voltage socket of a plug-in assembly in an electrical connector according to an embodiment of the present invention.
Fig. 8 is another schematic structural diagram of a low-voltage socket of a plug-in assembly in an electrical connector according to an embodiment of the present invention.
Fig. 9 is a schematic structural diagram of a low-voltage plug of a plug-in assembly in an electrical connector according to an embodiment of the present invention.

### DETAILED DESCRIPTION

The following further illustrates the present invention more clearly and completely by way of embodiments in conjunction with the drawings, but the present invention is not limited to the scope of the embodiments.

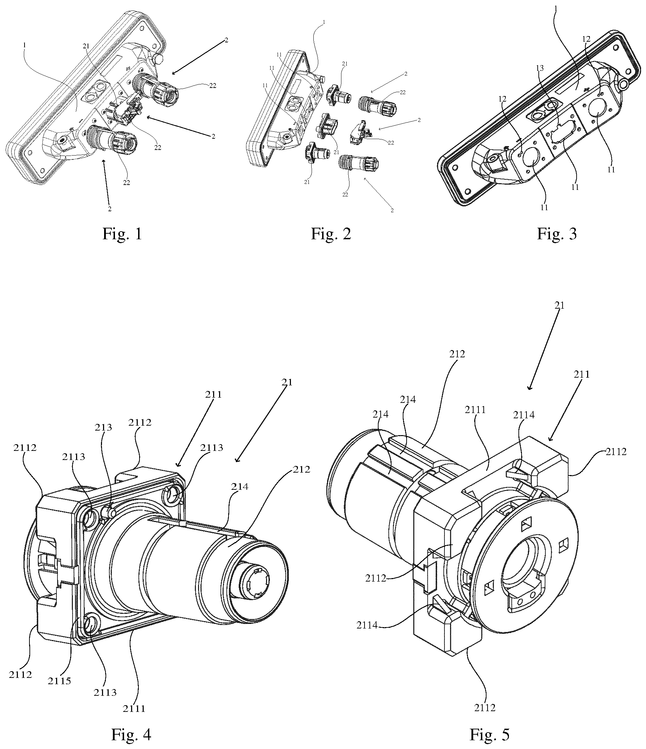

As shown in Figs. 1 to 9, an electrical connector according to an embodiment of the present invention includes a housing 1 and a plurality of plug-in assemblies 2. The housing 1 is provided with a plurality of wire outlets 11. The plurality of plug-in assemblies 2 are in one-to-one correspondence with the plurality of wire outlets 11. The plug-in assembly 2 includes a standard plug-in member 21 and a matching member 22. The standard plug-in member 21 is connected to the housing 1, and the standard plug-in member 21 passes through the wire outlet 11. One end of the matching member 22 is detechably connected to the standard plug-in member 21, and the other end of the matching member 22 is configured to be connected to an external harness.

Before the electrical connector is connected, the standard plug-in member 21 passes through the wire outlet 11 and is connected to a harness inside the housing 1, so that the standard plug-in member 21 and the housing 1 can be used as standard parts to realize the standardization of the standard plug-in member 21 and the housing 1, thereby simplifying the modeling of the housing 1, simplifying machining, saving the costs, reducing the difficulty in manufacturing and mounting, and improving the production efficiency of the electrical connector. Moreover, the matching members 22 may be optional according to different models of vehicles. The matching members 22 can be adjusted according to requirements for different harness lengths and different connection specifications; and finally the matching members 22 are connected to the standard plug-in members 21 to realize the connection and use of the electrical connector, thus achieving different use scenarios.

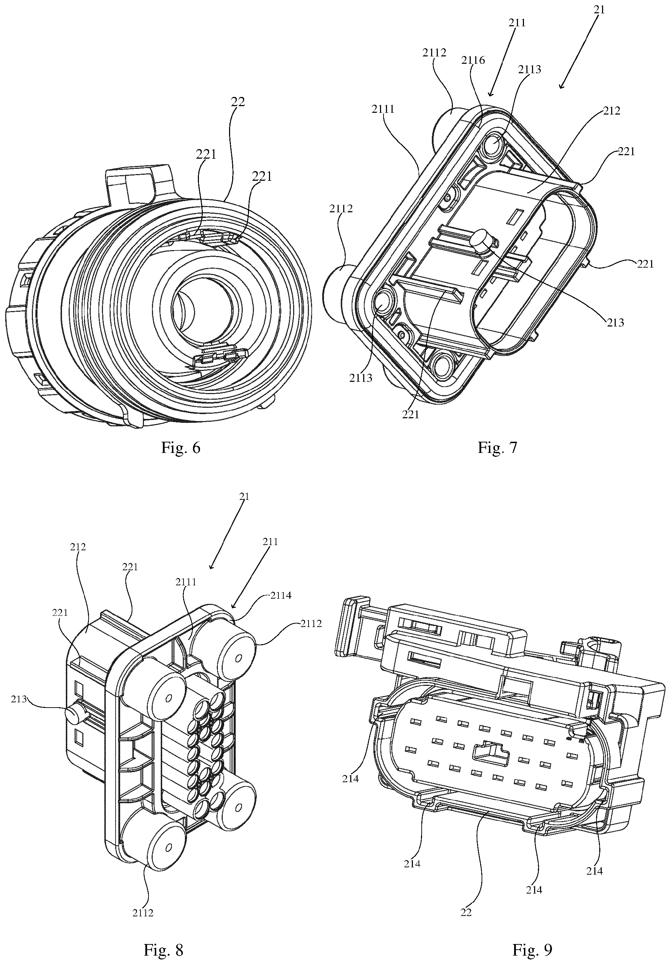

The standard plug-in member 21 can be configured as a high-voltage socket, and the matching member 22 can be configured as a high-voltage plug. The high-voltage socket is fitted with the high-voltage plug. The high-voltage plug is detachably plugged in the high-voltage socket. The harness is connected to the high-voltage plug and is electrically connected to the inside of the housing 1 through the high-voltage plug. Alternatively, the standard plug-in member 21 can also be configured as a high-voltage plug, and the matching member 22 can be configured as a high-voltage socket. The high-voltage socket is fitted with the high-voltage plug. The high-voltage plug is detachably plugged in the high-voltage socket. The harness is connected to the high-voltage socket and is electrically connected to the inside of the housing 1 through the high-voltage socket. Certainly, the standard plug-in member 21 can also be configured as a low-voltage socket, and the matching member 22 can be configured as a low-voltage plug. The low-voltage socket is fitted with the low-voltage plug. The low-voltage plug is detachably plugged in the low-voltage socket. The harness is connected to the low-voltage plug and is electrically connected to the inside of the housing 1 through the low-voltage plug. Alternatively, the standard plug-in member 21 can be configured as a low-voltage plug, and the matching member 22 can be configured as a low-voltage socket. The low-voltage socket is fitted with the low-voltage plug. The low-voltage plug is detachably plugged in the low-voltage socket. The harness is connected to the low-voltage socket and is electrically connected to the inside of the housing 1 through the low-voltage socket. In some embodiments of the present invention, the standard plug-in member 21 in Figs. 4 and 5 is configured as a high-voltage socket; the matching member 22 in Fig. 6 is configured as a high-voltage plug; the standard plug-in member 21 in Figs. 7 and 8 is configured as a low-voltage socket; and the matching member 22 in Fig. 9 is configured as a low-voltage plug.

The standard plug-in member 21 includes a mounting plate 211 and a plug-in body 212, the mounting plate 211 is connected to the housing 1, the plug-in body 212 passes through the mounting plate 211 and the wire outlet 11 and is connected to the mounting plate 211, and the matching member 22 is plugged in the plug-in body 212. One end of the plug-in body 212 is connected to the harness inside the housing 1 and is connected and fixed to the housing 1 through the mounting plate 211, and the other end of the plug-in body 212 is detachably connected with the matching member 22, which realizes the effects of simple structure and convenient use.

The mounting plate 211 includes a plate body 2111 and a plurality of thickened portions 2112. The plug-in body 212 passes through and is connected to the plate body 2111. One side of the plate body 2111 is connected to the housing 1, and the plurality of thickened portions 2112 are all located on the other side of the plate body 2111. One end of the thickened portion 2112 is connected to the plate body 2111, and the other end of the thickened portion 2112 extends and protrudes outwardly. The mounting plate 211 is provided with a plurality of mounting holes 2113. The plurality of mounting holes 2113 are in one-to-one correspondence with the plurality of thickened portions 2112. The mounting holes 2113 penetrate the thickened portions 2112 and the plate body 2111 and are connected to the housing 1 through fasteners. The mounting holes 2113 are formed in the thickened portions 2112 and connected to the housing 1, which effectively strengthens connection strength between the standard plug-in member 21 and the housing 1, improves the stability of the electrical connector, and saves the internal space resource of the housing 1.

The mounting plate 211 further includes a plurality of reinforcing ribs 2114, and both ends of the reinforcing rib 2114 are respectively connected to the plate body 2111 and the thickened portion 2112. Because of the reinforcing ribs 2114, the structural strength of the standard plug-in member is effectively strengthened and the stability of the electrical connector is improved.

The standard plug-in member 21 further includes at least one foolproof part 213. The foolproof part 213 is connected to the mounting plate 211, the housing is provided with at least one matching portion, and the matching portions are in one-to-one correspondence and matched with the foolproof parts 213. The foolproof part 213 may also be connected to the plug-in body 211, and the foolproof parts 213 are in one-to-one correspondence and matched with the matching portions. The standard plug-in member 213 is easily installed on and connected to the housing 1 through the foolproof part 213.

In some embodiments of the present invention, the foolproof part 213 on the high-voltage socket is connected to the mounting plate 211, and the foolproof part 213 on the low-voltage socket is connected to the plug-in body 212. In some embodiments of the present invention, on the high-voltage socket, one end of the foolproof part 213 is connected to a side, facing the housing 1, of the mounting plate 211, and the other end of the foolproof part 213 extends and protrudes outwardly; the matching portion of the housing 1 is configured as a positioning hole 12, and the foolproof part 213 is inserted into the positioning hole 12. Due to the foolproof part 213 and the positioning hole 12, accurate positioning is realized, the installation and connection of the housing 1 and the standard plug-in member 21 are facilitated, and the stability of the electrical connector is improved. In some embodiments of the present invention, on the low-voltage socket, one end of the foolproof part 213 is connected to an outer peripheral surface of the plug-in body 212, and the other end of the foolproof part 213 extends and protrudes outwardly in a radial direction of the plug-in body 212; the matching portion of the housing 1 is configured as a notch 13, and the foolproof part 213 passes through the notch 13.

The foolproof part 213, the mounting plate 211 and the plug-in body 212 can be integrally formed. The structural strength of the standard plug-in member 21 is effectively strengthened and the stability of the electrical connector is improved. Moreover, the electrical connector is convenient to manufacture, install and connect.

A seal ring 2116 is compressed between the mounting plate 211 and the housing 1; the seal ring 2116 is connected to and surrounds the wire outlet 11 incessantly; the mounting plate 211 is provided with a groove 2115 on a side facing the housing 1; and the seal ring 2116 is inserted into the groove 2115. The wire outlet 11 is effectively sealed by the seal ring 2116, which effectively strengthens the sealing performance inside the housing 1, thereby ensuring the stability and reliability of the electrical connector, and prolonging the service life of the electrical connector. Moreover, the groove 2115 facilitates the installation and connection of the seal ring 2116, and the groove 2115 can reserve a space for the deformation of the seal ring 2116, effectively preventing the seal ring 2116 from being damaged.

In some embodiments of the present invention, and in the high-voltage socket and the high-voltage plug, an outer peripheral surface of the standard plug-in member 21 is provided with at least one guide groove 214, the guide groove 214 extends along an insertion direction of the matching member 22, the matching member 22 is provided with at least one guide portion 221, the guide grooves 214 are in one-to-one correspondence with the guide portions 221, and the guide portion 221 can slide in the guide groove 214. When the matching member 22 is plugged in the standard plug-in member 21, the guide portion 221 slides in the guide groove 214. The guide portion 221 and the guide groove 214 play a role of guiding and positioning, which improves the plug-in accuracy of the matching member 22 and the standard plug-in member 21 and further improves the stability of the electrical connector.

In some embodiments of the present invention, and in the low-voltage socket and the low-voltage plug, the outer peripheral surface of the standard plug-in member 21 is provided with at least one guide portion 221, the guide portion 221 extends along the insertion direction of the matching member 22, the matching member 22 is provided with at least one guide groove 214, the guide grooves 214 are in one-to-one correspondence with the guide portions 221, and the guide portion 221 can slide in the guide groove 214. The guide portion 221 and the guide groove 214 play a role of guiding and positioning, which improves the plug-in accuracy of the matching member 22 and the standard plug-in member 21 and further improves the stability of the electrical connector.

Although the specific embodiments of the present invention are described above, those skilled in the art should understand that these are only examples, and various changes or modifications can be made to these embodiments without departing from the principle and essence of the present invention. Therefore, the protection scope of the present invention is defined by the appended claims.

## Claims

1. An electrical connector, comprising:
a housing provided with a plurality of wire outlets; and
a plurality of plug-in assemblies corresponding to the plurality of wire outlets one to one, the plug-in assembly including a standard plug-in member and a matching member, wherein the standard plug-in member is connected to the housing and passes through the wire outlet, one end of the matching member is detachably connected to the standard plug-in member, and the other end of the matching member is configured to be connected to an external harness.

2. The electrical connector according to claim 1, wherein the standard plug-in member comprises a mounting plate and a plug-in body, the mounting plate is connected to the housing, the plug-in body passes through the mounting plate and the wire outlet and is connected to the mounting plate, and the matching member is plugged in the plug-in body.

3. The electrical connector according to claim 2, wherein the mounting plate comprises a plate body and a plurality of thickened portions, the plug-in body passes through and is connected to the plate body, one side of the plate body is connected to the housing, the plurality of thickened portions are all located on the other side of the plate body, one end of the thickened portion is connected to the plate body, the other end of the thickened portion extends and protrudes outwardly, the mounting plate is provided with a plurality of mounting holes corresponding to the plurality of thickened portions one to one, the mounting holes penetrate the thickened portions and the plate body and are connected to the housing through fasteners.

4. The electrical connector according to claim 3, wherein the mounting plate further comprises a plurality of reinforcing ribs, and both ends of the reinforcing rib are respectively connected to the plate body and the thickened portion.

5. The electrical connector according to claim 2, wherein the standard plug-in member further comprises at least one foolproof part, the foolproof part is connected to the mounting plate and/or the plug-in body, the housing is provided with at least one matching portion, and the matching portions are in one-to-one correspondence and matched with the foolproof parts.

6. The electrical connector according to claim 5, wherein one end of the foolproof part is connected to a side, facing the housing, of the mounting plate, the other end of the foolproof part extends and protrudes outwardly, the matching portion is configured as a positioning hole, and the foolproof part is inserted into the positioning hole; and/or
one end of the foolproof part is connected to an outer peripheral surface of the plug-in body, the other end of the foolproof part extends and protrudes outwardly along a radial direction of the plug-in body, the matching portion is configured as a notch, and the foolproof part passes through the notch.

7. The electrical connector according to claim 5, wherein the foolproof part, the mounting plate and the plug-in body are integrally formed.

8. The electrical connector according to claim 2, wherein a seal ring is compressed between the mounting plate and the housing, the seal ring is connected to and surrounds the wire outlet incessantly, the mounting plate is provided with a groove on a side facing the housing, and the seal ring is inserted into the groove.

9. The electrical connector according to claim 1, wherein the standard plug-in member is configured as a high-voltage socket, and the matching member is configured as a high-voltage plug; or, the standard plug-in member is configured as a high-voltage plug, and the matching member is configured as a high-voltage socket; the high-voltage socket is fitted with the high-voltage plug; or
the standard plug-in member is configured as a low-voltage socket and the matching member is configured as a low-voltage plug; or, the standard plug-in member is configured as a low-voltage plug and the matching member is configured as a low-voltage socket; the low-voltage socket is fitted with the low-voltage plug.

10. The electrical connector according to claim 1, wherein an outer peripheral surface of the standard plug-in member is provided with at least one guide groove, the guide groove extends along an insertion direction of the matching member, the matching member is provided with at least one guide portion, the guide grooves are in one-to-one correspondence with the guide portions, and the guide portion is configured to slide in the guide groove; or
an outer peripheral surface of the standard plug-in member is provided with at least one guide portion, the guide portion extends along an insertion direction of the matching member, the matching member is provided with at least one guide groove, the guide grooves are in one-to-one correspondence with the guide portions, and the guide portion is configured to slide in the guide groove.
